# EUROPÄISCHE PATENTANMELDUNG

(11) **EP 0 908 658 A2**
(43) Veröffentlichungstag der Anmeldung: **14.04.1999**
(21) Anmeldenummer: 98117219.0
(22) Anmeldetag: 11.09.1998
(51) Int. Cl.: F16L 37/084, F17C 13/00

(54) **Anschlusskupplung für Druckgasbehälter**

(30) Priorität: 09.10.1997 DE 19744558
(71) Anmelder: MESSER GRIESHEIM GMBH, 60547 Frankfurt (DE)
(72) Erfinder: Pongraz, Johann, 47259 Duisburg (DE); Klebe, Ulrich, 47647 Kerken (DE)

(57) **Zusammenfassung**

Der Anschluß für Druckgasbehälter enthält ein verschiebbares Verbindungstück (6), welches ein Steckelement (2) mit einem Befestigungskopf (5) verbindet und eine Einheit mit dem Befestigungskopf bildet. Das Verbindungsstück (6) ist unverlierbar angebracht und vorzugsweise in einer schwalbenschwanzförmigen Fuge (10) verschiebbar.

## Beschreibung

Die Erfindung betrifft einen wechselbaren Steckanschluß für Druckgasbehälter.

Gase werden in Druckgasflaschen oder größeren Behältern den Verbrauchern zur Verfügung gestellt. Zu dem Gaselieferanten rücklaufende Druckgasflaschen enthalten in der Regel geringe Mengen an Restgas, das entsorgt oder einer Wiederverwertung zugeführt wird. Hierbei werden die in der Regel auf Paletten befindlichen Druckgasflaschen evakuiert und mit einem Inertgas gespült. Zum Evakuieren und Spülen sowie Konditionieren werden alle oder eine größere Anzahl der auf der Palette befindlichen Druckgasflaschen über flexible Schläuche mit einem an der Palette befestigten, auswechselbaren Verteilerrohr verbunden. Die Verteilerrohre stehen über Leitungen mit den Flaschenbehandlungsstellen in Verbindung.

Beim Spülen und Evakuieren sowie Konditionieren der Druckgasflaschen müssen je nach Gasart unterschiedliche Verteilerrohre mit gasspezifischer Verschraubung zur Verfügung gestellt werden. Es ergibt sich für den Betreiber derartiger Flaschenbehandlungsanlagen die Notwendigkeit, für jede Gasart mindestens ein Verteilerrohr mit der entsprechenden gasespezifischen Verschraubung bereitzuhalten, welches dann nur mit dieser speziellen Gasart gefüllt war. Mehr oder weniger häufig sind aber größere Mengen Paletten mit Druckgasflaschen zu spülen und evakuieren sowie zu konditionieren, welche vorher mit dem gleichen Gas gefüllt waren. In diesem Fall kann das Spülen und das Evakuieren sowie Konditionieren nur nacheinander erfolgen, wenn nicht für die Vollauslastung der Flaschenbehandlungsanlage für jede Gasart eine entsprechende Anzahl Verteilerrohre mit gasespezifischer Verschraubung bereitgehalten werden.

Das deutsche Gebrauchsmuster DE 93 10 252.6-U1 beschreibt einen steckbaren Anschluß für eine Vorrichtung zum Evakuieren und Spülen sowie Konditionieren von Druckgasflaschen, wobei ein einschiebbares Steckelement die Steckverbindung fixiert. Ein großer Nachteil bei diesem steckbaren Anschluß ist, daß das Steckelement nicht fest mit dem Anschluß verbunden ist und bei unachtsamer Handhabung zu Fall kommen kann, wobei eine Beschädigung des Teiles auftreten kann. Außerdem besteht die Gefahr, daß das Teil verloren geht.

Aufgabe der Erfindung besteht daher darin eine Anschlußvorrichtung zu schaffen, die die genannten Nachteile vermeidet.

Gelöst wurde die Aufgabe durch einen Anschluß mit den Merkmalen gemäß Anspruch 1.

Vorteilhafte Weiterbildungen der Erfindung sind in den Unteransprüchen angegeben.

Druckbehälter sind beispielsweise Druckgasbehälter, Druckgasflaschen oder Druckdosen.

Der Anschluß gemäß der Erfindung besteht aus einem Befestigungskopf mit Gewinde (Innen- oder Außengewinde) zum Anschluß an das Gasentnahmeventil eines Druckbehälters, einem in den Befestigungskopf passenden Steckelement für die Verbindung mit einer Gasleitung und einem mit dem Befestigungskopf beweglich verbundenen Verbindungsstück, das das Steckelement an dem Befestigungskopf lösbar verankert. Die Besonderheit des Anschlusses besteht in dem unverlierbaren Verbindungsstück. Das Verbindungsstück weist vorzugsweise eine mittlere, zwischen Unterseite und Oberseite durchgehende Öffnung auf, die eine engere Teilöffnung als Schließelement und eine weitere Teilöffnung als Entnahmeöffnung für das Steckelement enthält.

Verbindungstück und Befestigungskopf weisen ein Führungssystem auf. Das Führungssystem ist schienenartig aufgebaut und ist beispielsweise ein Nut- und Feder-System, insbesondere eine Schwalbenschwanz-Nut und -Feder. Das Steckelement ist vorzugsweise mit einer flexiblen Leitung (z. B. Synflexschlauch, Wellschlauch oder metallischer Spiralschlauch), beispielsweise mit einem Gaseabfüllstand, fest verbunden, z. B. über ein am Kopf des Steckelementes eingeschraubtes Teil mit NPT 1/4". Das Steckelement, z. B. mit einer Weichdichtung bestückt, ist für die Abdichtung von gängigen Gasarten einsetzbar. Das Steckelement ist durch entsprechende Steckelemente, die beispielsweise an verschiedene Gaseleitungen fest angeschlossen sind, leicht austauschbar. Verschiedene Steckelemente sind somit mit verschiedenen Befestigungsköpfen, z. B. auf Druckgasflaschen mit verschiedenen Gasen, frei kombinierbar. Das Steckelement weist ein Steckteil, ein Verriegelungsteil und ein Leitungsanschlußteil auf. Vorzugsweise ist das Steckelement zylindrisch aufgebaut. Das Steckteil hat vorzugsweise einen größeren Durchmesser als das Verriegelungsteil. Das Verriegelungsteil kann beispielsweise eine umlaufende Nut oder eine Verjüngung im Steckelement sein. Die Höhe der Nut kann größer als die Höhe des Verbindungsstückes sein, da für die Verbindung (Verriegelung) von Verbindungsstück und Befestigungskopf allein der Übergang von dem größeren Durchmesser des Steckteiles auf den kleineren Durchmesser des Verriegelungsteiles notwendig ist. In geschlossener Stellung (Verriegelung) setzt sich ein Teil des Verbindungsstückes über einen Teil der Oberkante des Steckteiles.

Das Verbindungsstück ist vorzugsweise durch einen Anschlag vor dem Herausnehmen aus dem Befestigungskopf gesichert. Vorzugsweise ist auf der dem Verbindungsstück gegenüberliegenden Seite des Befestigungskopfes eine Nut angebracht, in der sich ein Begrenzungselement beispielsweise ein Vorsprung, ein Begrenzungsstift oder ein Teil einer Schraube, am Verbindungsstück angeordnet, bewegt und beide oder eines der Nutenden Anschlagpositionen bilden. Der Anschlag kann prinzipiell auch durch eine umgekehrte Anordnung gebildet werden, das heißt das Begrenzungselement kann am Befestigungskopf und die Nut am Verbindungsstück angebracht sein. Das Begrenzungselement wird beispielweise eingeschraubt, gesteckt, gelötet, geschweißt oder geklebt.

Vorzugsweise wird das Verbindungstück in geschlossener Stellung durch ein federndes Druckstück gehalten.

Die wesentlichen Teile des Anschlusses sind vorzugsweise aus Metall, z. B. aus Messing oder Edelstahl. Einzelne Teile wie das Verbindungsstück können ganz oder teilweise auch aus Kunststoff gefertigt sein. Mögliche Kunststoffe sind beispielsweise thermoplastische Kunststoffe wie Polyethylen, Polypropylen, Polystyrol, PVC, ABS, Polyacetal, Polyester, Polyetherketon, Polyarylensulfid oder flüssigkristallines Polymer (LCP).

Ein Ausführungsbeispiel der Erfindung ist in der Zeichnung dargestellt und wird im folgenden am Beispiel einer Druckgasflasche als Druckgasbehälter näher beschrieben.

Es zeigen
- Fig. 1: einen Anschluß, der es mit Hilfe der Erfindung gestattet, den gasespezifischen Befestigungskopf zu wechseln,
- Fig. 2: das Verbindungstück, über das der Befestigungskopf und das Steckelement gekoppelt werden,
- Fig. 3: eine Draufsicht auf den Befestigungskopf mit der Fuge mit Schwalbenschwanzprofil.

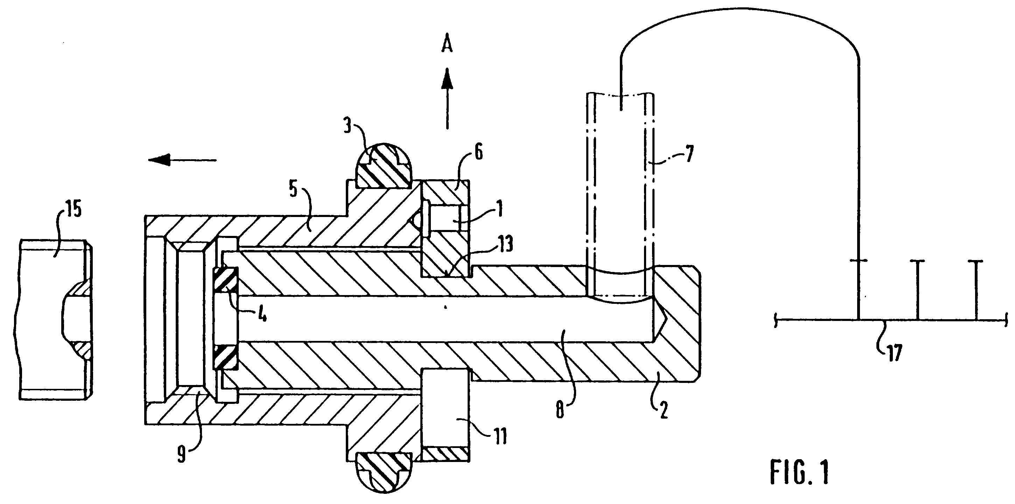

Fig. 1 zeigt einen Anschluß, der im wesentlichen aus einem Steckelement 2 mit Sitzabdichtung 4, einer auf das Steckelement 2 aufsteckbaren gasartspezifischen Befestigungskopf 5 und eine den Befestigungskopf 5 und das Steckelement 2 koppelnden Verbindungstück 6 besteht. Das Steckelement 2 weist eine Bohrung 8 auf, die von der Sitzabdichtung 4 umgeben ist, und welche das Flaschenventil der Druckgasflasche 15 über das Verteilerrohr 17 mit der Vorrichtung zum Evakuieren und Spülen verbindet. Hierbei ist das Steckelement 2 über das in der Zeichnung nur angedeutete Rohr 7 mit dem flexiblen Schlauch des Verteilerrohres 17 verbunden.

Der auf das Steckelement 2 aufgesteckte Befestigungskopf 5 weist eine gasespezifische Verschraubung 9 (Gewinde) auf. Über die Verschraubung 9 wird der Befestigungskopf auf den Anschlußstutzen des Flaschenventiles geschraubt bis die Sitzabdichtung 4 an dem entsprechenden Sitz des Ventils gasdicht anliegt. Zur besseren Handhabung ist hierzu am Umfang des Befestigungskopfes 5 ein wie ein Handrad gestalteter Griffrand 3 vorgesehen.

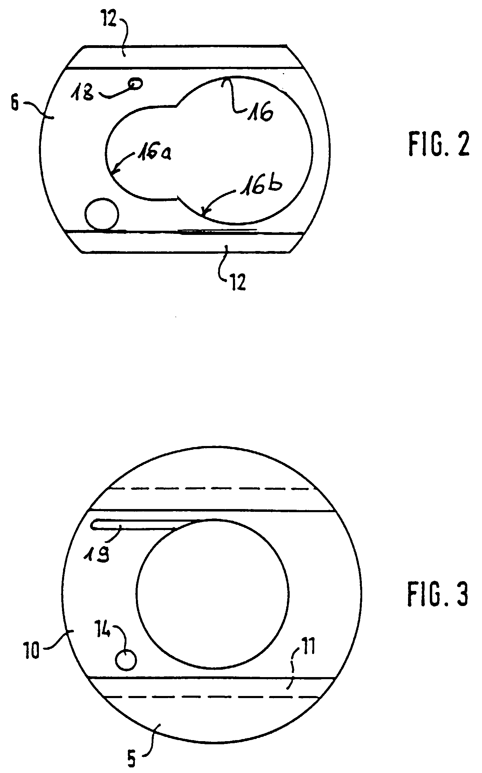

Am oberen Ende des Befestigungskopfes 5 ist eine Fuge 10 (Fig.3) mit Schwalbenschwanzprofil 11 ausgebildet, in welche das Verbindungstück 6 (Fig. 2) geschoben wird. Hierzu ist das Verbindungstück als Schwalbenschwanzfeder 12 ausgebildet, die eine mittige Nut (Aussparung) 16 aufweist. Die Nut 16 ist eine in sich geschlossene Öffnung und besteht aus einer kleinen Teilöffnung 16a mit einem auf die Ringnut 13 passenden Durchmesser und einer großen Teilöffnung 16b mit einem zum Steckelement passenden Durchmesser. In geschlossener (eingeschobener) Stellung greift der Rand der kleinen Teilöffnung 16a, in die Ringnut 13 des Steckelementes und das Steckelement 2 wird mit dem Befestigungskopf 5 gekoppelt. Ein unbeabsichtigtes Lösen der Verbindung zwischen Befestigungskopf 5 und Steckelement 2 wird mittels einers federnden Druckstückes 1 verhindert, welches in dem Verbindungstück 6 angeordnet ist und nach dem Aufschieben in eine entsprechende Bohrung 14 am Boden der Fuge 10 der Befestigungskopf 5 eingreift. Eine Langlochbohrung 19 (Nut; Fig. 3) im Boden der Fuge 10 dient als Anschlag für die Positionen 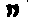 Öffnen" und 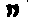 Schließen", in die ein Begrenzungsstift, angebracht in der Öffnung 18, greift. Der Begrenzungsstift (z. B. eine Schraube in der mit einem Gewinde versehenen Öffnung 18) verhindert ein Herausziehen des Verbindungstückes aus der Schwalbenschwanz-Nut bei herausgenommenem Steckelement. Der Begrenzungsstift dient auch zur Positionierung des Verbindungsstückes 6.

Über das Verbindungstück 6 wird die beim Anziehen des Befestigungskopfes 5 in der Verschraubung 9 anstehende Kraft auf das Steckelement 2 übertragen und so die Abdichtung des Anschlusses gegenüber dem Flaschenventil der Druckgasflasche 15 bewirkt.

## Patentansprüche

1. Anschluß für Druckgasbehälter, enthaltend ein verschiebbares Verbindungstück (6), welches ein Steckelement (2) mit einem Befestigungskopf (5) verbindet und eine Einheit mit dem Befestigungskopf bildet.

2. Anschluß nach Anspruch 1, dadurch gekennzeichnet, daß das Verbindungstück (6) eine Öffnung enthält, durch die das Steckelement (2) in den Befestigungskopf (5) geführt werden kann.

3. Anschluß nach Anspruch 1 oder 2, dadurch gekennzeichnet, daß der Befestigungskopf (5) eine Fuge (10) mit Schwalbenschwanzprofil und das Verbindungstück (6) als Schwalbenschwanzfeder ausgebildet ist, die in die Fuge (10) schiebbar ist.

4. Anschluß nach einem der Ansprüche 1 bis 3, dadurch gekennzeichnet, daß das Steckelement (2) ein Verriegelungsteil (13) und das Verbindungstück (6) eine zum Verriegelungsteil (13) passende Öffnung (16) aufweist.

5. Anschluß nach einem der Ansprüche 1 bis 4, dadurch gekennzeichnet, daß in dem Verbindungstück (6) ein federndes Druckstück (1) angeordnet ist, das in eine Bohrung (14) am Befestigungskopf (5) eingreift.

6. Anschluß nach einem der Ansprüche 1 bis 5, dadurch gekennzeichnet, daß in der Fuge (10) am Befestigungskopf (5) eine Nut (19) angebracht ist, in der sich ein Begrenzungselement des Verbindungstückes (6) bewegt.
